(19) Europäisches Patentamt / European Patent Office / Office européen des brevets

(11) **EP 2 811 641 A1**

(12) **EUROPEAN PATENT APPLICATION**

(43) Date of publication:
**10.12.2014 Bulletin 2014/50**

(21) Application number: **13170675.6**

(22) Date of filing: **05.06.2013**

(51) Int Cl.:
*H02M 7/219* (2006.01)          *H02M 7/5387* (2007.01)
*H02M 1/00* (2007.01)          *H02M 7/483* (2007.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
• **Nademi, Hamed**
  **7011 Trondheim (NO)**
• **Norum, Lars**
  **7013 Trondheim (NO)**

Remarks:
Amended claims in accordance with Rule 137(2) EPC.

(54) **Controlling the operation of an converter having a plurality of semiconductor switches for converting high power electric signals from DC to AC or from AC to DC**

(57)    Method and computer program for controlling the operation of a power converter (100) comprising a plurality of semiconductor switches ($S_1$, $S_2$). The method comprises determining, in a rotating dq-reference frame, a direct current error signal ($i_{derr}$) and a quadrature current error signal ($i_{qerr}$). Cross-coupling between the direct and quadrature axis improves stability and allows for reduced perturbation.

FIG 4

EP 2 811 641 A1

## Description

Field of invention

The present invention generally relates to the technical field of converting high power electric signals from DC to AC or vice versa from AC to DC. Specifically, the present invention generally relates to a method for controlling the operation of a DC-AC or AC-DC converter comprising a plurality of semiconductor switches with a control procedure which is carried out in a rotating dq-reference frame. Further, the present invention relates to a controller and to a computer program being configured for controlling and/or for carrying out the described method for controlling.

Art Background

For the purpose of the low-loss conversion of electric energy, a plurality of rectifier or inverter circuits are known. Such converter circuits are used in the higher power range to control the flow of energy between electrical machines and power systems (variable speed drives) or between different power systems (power couplings). High power converters can also be used for performing a reactive power compensation and voltage stabilization in power supply networks.

Modular Multilevel Converter (MMC) is a converter topology that has gained considerable attention of academia and industry in recent times. In this topology, additional advantages can be provided over other conventional voltage source converters. The modular structure, low device rating, fault tolerant capacity are some of the key features of MMC. The MMC has already been introduced in the market for high voltage dc power transmission (HVDC). It is expected that MMC can also be used in dc to ac (dc-ac) power conversion e.g. for ac drives.

Using rotating dq-reference frame theory, in a steady-state operation all sinusoidal signals within a MMC are transformed into dc quantities and can be easily adjusted by proportional-integral (PI) controllers. However, conventional approaches for controlling the operation of a MMC are sensitive to load parameters, which may influence the dynamic response and the stability of the whole MMC system.

There may be a need for providing a concept for controlling the operation of a high power converter comprising a plurality of semiconductor switches in a stable and reliable manner.

Summary of the Invention

This need may be met by the subject matter according to the independent claims. Advantageous embodiments of the present invention are described by the dependent claims.

According to a first aspect of the invention there is provided a method for controlling the operation of a DC-AC or AC-DC converter comprising a plurality of semiconductor switches. The provided method comprises (a) determining, in a rotating dq-reference frame, a direct current error signal and a quadrature current error signal, (b) performing a first control procedure with the direct current error signal and with the quadrature current error signal, (c) performing a second control procedure with the direct current error signal and with the quadrature current error signal, (d) obtaining a direct voltage control signal by subtracting the signal resulting from the second control procedure of the quadrature current error signal from the signal resulting from first control procedure of the direct current error signal, (e) obtaining a quadrature voltage control signal by adding the signal resulting from the second control procedure of the direct current error signal to the signal resulting from first control procedure of the quadrature current error signal, (f) executing a transformation from the rotating dq-reference frame to a stationary abc-reference frame based on (i) the obtained direct voltage control signal and (ii) the obtained quadrature voltage control signal ($u_q$), and (g) controlling the switching states of the plurality of semiconductor switches based on the signals resulting from the executed transformation from the rotating dq-reference frame to the stationary abc-reference frame.

The described control method is based on the idea that the stability of a control of a DC-AC or AC-DC (power) converter can be significantly improved by providing a decoupling between (i) a direct current control procedure and (ii) a quadrature current control procedure. When being decoupled, a perturbation or a transitional behavior on the quadrature-axis (q-axis) of the rotating dq-reference frame will have no or at least a significantly reduced (unwanted) impact on the direct-axis (d-axis) of the rotating dq-reference frame. The same holds vice verse for the impact of a perturbation or a transitional behavior on the d-axis towards the q-axis of the rotating dq-reference frame.

Descriptive speaking, the second control procedure provides a decoupling with modified cross coupling terms on the d-axis and on the q-axis, which are combined with the signals resulting from the first control procedure of the quadrature current error signal and of the direct current error signal, respectively.

The mentioned DC-AC or AC-DC converter may be any power electric device which is capable of inverting a DC-power signal into an AC-power signal or of rectifying an AC-power signal into a DC-power signal based on an appropriate pattern of switching control signals applied to the gates of the semiconductor switches. The semiconductor switches may be e.g. so called Insulated Gate Bipolar Transistors (IGBT's). Within the converter, the semiconductor switches may be connected with electric valves in such a manner that a half-bridge or a full-bridge converter is formed. The electric valves may be e.g. semiconductor diodes.

According to an embodiment of the invention the first control procedure is a proportional-integral control procedure. This may provide the advantage that for carrying out the described control method usual current and/or voltage controllers can be used.

According to a further embodiment of the invention the second control procedure is an integral control procedure. Also this may provide the advantage that for carrying out the described control method usual current and/or voltage controllers can be used.

According to a further embodiment of the invention the transformation from the rotating dq-reference frame to the stationary abc-reference frame is executed further based (i) on a direct voltage feedforward signal resulting from a transformation of three voltages being physically present at three nodes of symmetry within the DC-AC or AC-DC converter from the stationary abc-reference frame to the rotating dq-reference frame and (ii) on a quadrature voltage feedforward signal resulting from a transformation of the three voltages being physically present at the three nodes of symmetry within the DC-AC or AC-DC converter from the stationary abc-reference frame to the rotating dq-reference frame.

Taking into account these two voltage feedforward signals may provide the advantage that on a load side of the converter harmonic disturbances can be effectively reduced.

According to a further embodiment of the invention the transformation from the rotating dq-reference frame to the stationary abc-reference frame is executed with a modified direct voltage control signal and with a modified quadrature voltage control signal. Thereby, the modified direct voltage control signal is obtained by adding the direct voltage control signal to the direct voltage feedforward signal. Further, the modified quadrature voltage control signal is obtained by adding the quadrature voltage control signal to the quadrature voltage feedforward signal.

Obtaining the described modified direct voltage control signal and the described modified quadrature voltage control signal by a simple summation may provide the advantage that there is only a small effort for generating the signals being used for the described transformation from the rotating dq-reference frame to the stationary abc-reference frame.

Further, by using a simple summation for obtaining the signals (i.e. the modified direct voltage control signal and the modified quadrature voltage control signal) being used for the described transformation from the rotating dq-reference frame to the stationary abc-reference frame a very quick response with respect to voltage disturbances of the output power signals of the converter can be realized.

According to a further embodiment of the invention the DC-AC or AC-DC converter is a modular multilevel converter comprising three branches each branch comprising an upper arm and a lower arm, wherein each arm comprises a serial connection of a plurality of submodules, wherein each submodule comprises a capacitor and two semiconductor switches. Thereby, controlling the switching states of the semiconductor switches being assigned to one branch is further executed based on (i) a first reference voltage for the upper arm of the respective branch and (ii) a second reference voltage for the lower arm of the respective branch. This may provide the advantage that capacitor voltage variations within each arm of the DC-AC or AC-DC converter can be effectively reduced.

In accordance with the known topology of a modular multilevel converter the two semiconductor switches of each submodule are connected in such a manner that (i) when a first semiconductor switch is On and the second semiconductor switch is Off, the output voltage $V_o$ of this submodule is zero, and (ii) when a first semiconductor switch is Off and the second semiconductor switch is On, the output voltage $V_o$ of this submodule is a nonzero voltage being present over the respective capacitor.

According to a further embodiment of the invention obtaining, for each branch of the modular multilevel converter, a first reference voltage for the upper arm of the modular multilevel converter based on (i) a derivative with respect to time of a circulating current circulating through the respective branch, (ii) the actual voltage ($V_{dc}$) of a DC voltage bridge of the modular multilevel converter, and (iii) one voltage of the three voltages being physically present at three nodes of symmetry within modular multilevel converter, wherein the one voltage is assigned to the respective branch. Further, obtaining, for each branch of the modular multilevel converter, a second reference voltage for the lower arm of the modular multilevel converter based on (i) the derivative with respect to time of the circulating current circulating through the respective branch, (ii) the actual voltage of the DC voltage bridge of the modular multilevel converter, and (iii) one voltage of the three voltages being physically present at three nodes of symmetry within the modular multilevel converter, wherein the one voltage is assigned to the respective branch. This may provide the advantage that capacitor voltage variations within each arm of the DC-AC or AC-DC converter can be further reduced.

According to a further embodiment of the invention determining the direct current error signal comprises comparing, in the rotating dq-reference frame, a calculated active current signal with an active current reference signal. The described comparison may be carried out by a summation unit, which determines simply the difference between (i) the calculated active current signal with (ii) the active current reference signal.

The calculated active current signal in the rotating dq-reference frame may be obtained by measuring, in the stationary abc-reference frame, three physically existing currents each being assigned to one phase of a three-phase current within the DC-AC or AC-DC converter and transforming the three measured currents into the rotating dq-reference frame.

According to a further embodiment of the invention the active current reference signal is determined based on a measured active power signal being indicative for the actual active power being transferred with the DC-AC or AC-DC converter.

Specifically, the active current reference signal may be determined based on an active power error signal which is given by the difference between the measured active power signal and an active power reference signal.

More specifically, the active current reference signal may be determined based on (i) the active power error signal and (ii) an actual voltage error signal which is given by the difference between the actual voltage of the DC voltage bridge of the modular multilevel converter and a given reference signal for the voltage of the DC voltage bridge.

According to a further embodiment of the invention determining the quadrature current error signal comprises comparing, in the rotating dq-reference frame, a calculated reactive current signal with an reactive current reference signal. Also the comparison described here may be carried out by a summation unit, which determines simply the difference between (i) the calculated reactive current signal with (ii) the reactive current reference signal.

Also thee calculated reactive current signal in the rotating dq-reference frame may be obtained by measuring, in the stationary abc-reference frame, the three physically existing currents each being assigned to one phase of the three-phase current within the DC-AC or AC-DC converter and transforming these three measured currents into the rotating dq-reference frame.

According to a further embodiment of the invention the reactive current reference signal is determined based on a measured reactive power signal being indicative for the actual reactive power being transferred with the DC-AC or AC-DC converter.

Specifically, the reactive current reference signal may be determined based on an reactive power error signal which is given by the difference between the measured reactive power signal and an reactive power reference signal.

According to a further aspect of the invention there is provided a controller for controlling the operation of a DC-AC or AC-DC converter comprising a plurality of semiconductor switches. The provided controller is configured for carrying out the method as described above for controlling the operation of a DC-AC or AC-DC converter comprising a plurality of semiconductor switches.

Also the described controller is based on the idea that the stability of an operation of a DC-AC or AC-DC converter can be significantly improved by providing a decoupling between (i) a direct current control procedure and (ii) a quadrature current control procedure. When being effectively decoupled, a perturbation or a transitional behavior on one of the quadrature-axis (q-axis) of the rotating dq-reference frame and the direct-axis (d-axis) of the rotating dq-reference frame will have no or at least a significantly reduced (unwanted) impact on the signal of other one of the d-axis and the q-axis.

According to a further aspect of the invention there is provided a computer program for controlling the operation of a DC-AC or AC-DC converter comprising a plurality of semiconductor switches. The computer program, when being executed by a data processor, is adapted for controlling and/or for carrying out the above elucidated method for controlling the operation of a DC-AC or AC-DC converter.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawing

Figure 1    illustrates the basic structure of a known modular multilevel converter (MMC).
Figure 2    shows one cell of the MMC illustrated in Figure 1.
Figure 3    shows in a block diagram the transfer functions of a controller in accordance with an embodiment of the invention.
Figure 4    shows a schematic diagram of a controller in accordance with an embodiment of the invention.
Figure 5    shows a control block for mitigating capacitor voltage fluctuations in the arms of a MMC.

Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated are not elucidated again at a later position of the description.

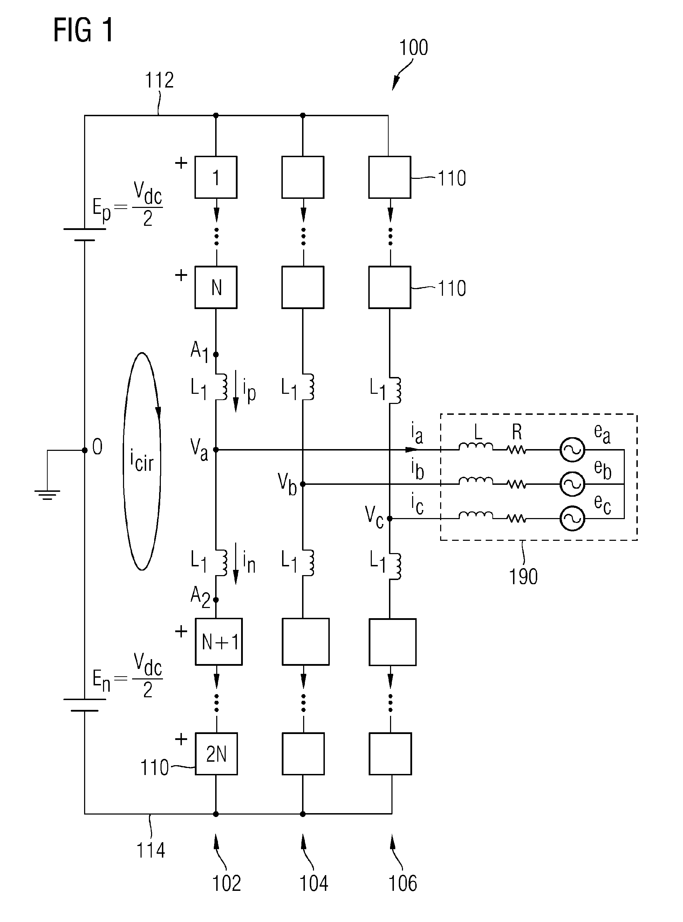

Figure 1 illustrates the basic structure of a known modular multilevel converter (MMC) 100. According to the embodiment described here the MMC 100 is used for converting a DC voltage $V_{dc}$ into a three-phase current having voltages $V_a$, $V_b$ and $V_c$ and currents $i_a$, $i_b$ and $i_c$, which drive a load 190 respectively a three-phase machine 190. In case the MMC 100 is used as a rectifier, reference numeral 190 would represent a power or supply grid. In Figure 1 the load 190 respectively the three-phase machine 190 is depicted with its equivalent circuit consisting of, for each phase, an inductor L, a resistor R and one of the voltage source $e_a$, $e_b$ and $e_c$.

In accordance with the known structure of MMCs the MMC 100 comprises three braches 102, 104 and 106 each being assigned to one phase of the three-phase current. Each branch 102, 104, 106 consists of two arms, one upper arm and one lower arm. Each arm comprises N cells 110 which are connected in series with an inductor L1. Therefore, the MMC 100 shown in Figure 1 has a N-level topology and can be called a N-level MMC. The inductor L1 represents in an equivalent circuit the inductance of the respective arm inductor.

In Figure 1, the current flowing through an upper arm is denominated $i_p$. Correspondingly, the current flowing through a lower arm is denominated $i_n$. A so called circulating current between two DC buses 112, 114 or between the three phases is denominated $i_{cir}$.

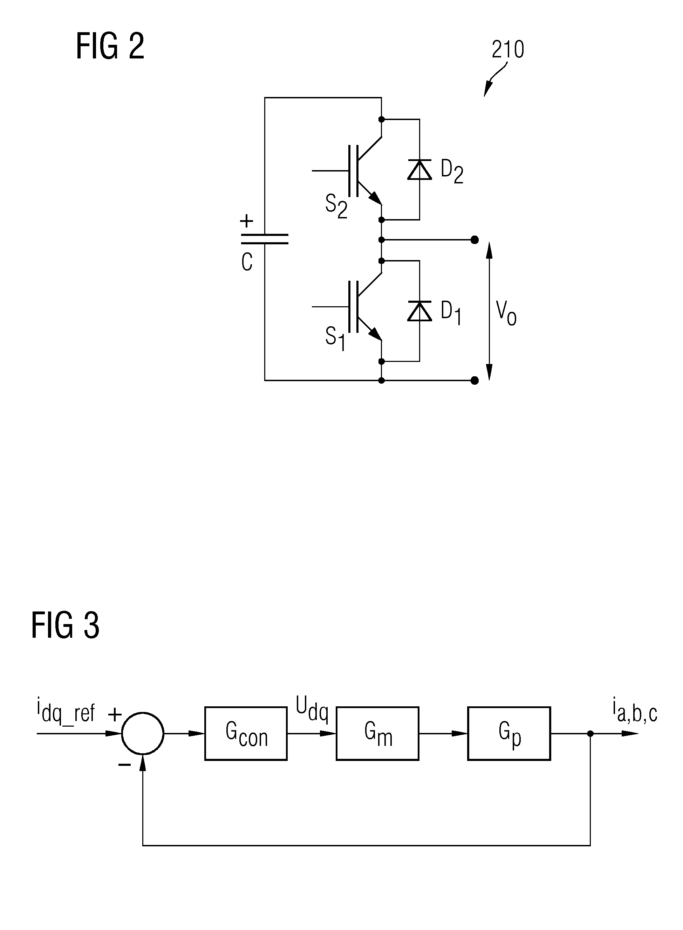

Figure 2 shows one cell of the MMC 100, which is now denominated with reference numeral 210. The cell 210 comprises one capacitor C, two semiconductor switches $S_1$ and $S_2$ and two diodes $D_1$ and $D_2$. According to the embodiment described here the semiconductor switches $S_1$ and $S_2$ are Insulated Gate Bipolar Transistors (IGBT's).

In the following the operating principles of the MMC 100 will be described with reference to Figures 1 and 2.

It can easily be understood from Figure 1 that the Voltage $V_{dc}$ is given by the following equation (1) :

$$V_{dc} = \sum_{j=1}^{2N} v_j + L_1 \frac{d}{dt}(i_p + i_n) \tag{1}$$

Thereby, $v_j$ is the output voltage of the respective cell, L1 is the inductance of the arm inductor, and $i_p$ and $i_n$ are currents in the upper arm and the lower arm, respectively.

When the semiconductor switch $S_1$ is On and the semiconductor $S_2$ is Off, the output voltage $V_o$ of the cell 210 will be zero. On the other hand, when the semiconductor switch $S_1$ is Off and the semiconductor switch $S_2$ is On, the output voltage $V_o$ of the cell 210 will be unequal zero. Specifically, the sum of the voltages $V_o$ of all cells 210, where $S_1$ is Off and $S_2$ is On, will be $V_{dc}$.

In this respect it is mentioned that without a loss of generality, the analysis elucidated here has been applied to one phase of the MMC 100 including N cells 110 for each arm.

As has already been mentioned above, every branch or phase-leg of the MMC 100 is composed of two arms where each arm has a number of N cells. In turn, in every cell 110 where $S_1$ is Off and $S_2$ is On the respective capacitor C will be charged with a part of the voltage $V_{dc}$. In this respect it is pointed out that during any moment, half the cells 110 are connected and half the cells 110 are bypassed. For instance, if at a given instant in the upper arm cells 110 from 2 to N are in the On-state, in the lower arm only one cell 110 should be in On-state. This is necessary since the sum of all connected cells 110 in a phase-leg must be $V_{dc}$.

The load current $i_a$ in the A-phase is equal with the sum of the arm currents $i_p$ and $i_n$ (Equation (2)), while a circulating current $i_{cir}$ between the DC buses 112, 114 or between the phases is given by Equation (3):

$$i_a = i_p - i_n \tag{2}$$

$$i_{cir} = \frac{i_p + i_n}{2} \tag{3}$$

More importantly, the capacitors C constantly charge/discharge due to the flow of the load current through them. Thus, the voltages at points $A_1$ and $A_2$ are not exactly equal all the time. The arm inductors $L_1$ are inserted in the circuit to limit the flow of circulating current $i_{cir}$ due to this voltage difference.

In the following a scheme for analyzing and controlling the MMC 100 will be elucidated.

The dynamic equations of the ac-side voltages of the MMC 100 in the stationary abc-reference frame are given, based on Figure 1, as following

$$V_i = R.i_i + L.\frac{di_i}{dt} + e_i \qquad where \ \ i = a,b \ or \ c \tag{4}$$

The ac system variables will be transferred to a dq-reference frame using the well known Park's transformation. This yields the following nonlinear equation system:

$$\frac{di_d}{dt} = -\frac{R}{L}i_d + \frac{1}{L}\left(V_d - e_d + \omega L.i_q\right) \tag{5}$$

$$\frac{di_q}{dt} = -\frac{R}{L}i_q + \frac{1}{L}\left(V_q - e_q - \omega L.i_d\right)$$

Here, $i_d$, iq are the d-axis and q-axis components of the load currents, $V_d$, Vq are the d-axis and q-axis components of the converter ac output voltages. Further, $e_d$, $e_q$ are the components of the ac voltage source of three-phase supply grid 190 or an electrical machine 190. R and L represent the resistor and inductor of the three-phase ac side.

Equation (5) shows how in the dq-reference frame the dq-voltage equations of the three-phase load connected MMC 100 (see Figure 1) are dependent due to the two cross-coupling terms $\omega L.i_q$ and $\omega L.i_d$.

From the instantaneous active power (P) and reactive power (Q) theory in the dq-reference frame the following Equations (6) can be obtained:

$$P = \frac{3}{2}\left(V_d.i_d + V_q.i_q\right) \tag{6}$$

$$Q = \frac{3}{2}\left(V_d.i_q - V_q.i_d\right)$$

Under balanced steady-state conditions, the d-axis coincides with the instantaneous load voltage vector. When synchronizing the rotating reference frame and the ac load, the following equation applies:

$$V_d = V_m, \quad V_q = 0 \qquad (7)$$

Thereby, $V_m$ is the peak value of the ac phase voltage of the load.
Thus, the active and reactive power equations will be:

$$P = \frac{3}{2} V_d . i_d \qquad (8)$$

$$Q = \frac{3}{2} V_d . i_q$$

From the above equations, it can be seen that the d-axis current and q-axis current components correspond to the real power P and to the reactive power Q, respectively.
The MMC 100 described here is modulated with a PWM unit and the load current is controlled with the help of a PI controller.
For designing a controller for the MMC 100, a usual method based on an open loop analysis of the control circuit is employed. The corresponding model with transfer functions is shown in Figure 3, where $G_p$ represents the system transfer function, $G_m$ represents an equivalent transfer function representing the delay introduced by the PWM modulation circuit, and $G_{con}$ represents the PI controller. The open loop transfer function is given by

$$G_o = G_{con} . G_m . G_p \qquad (9)$$

After the transformation of Equation (4) in dq-reference frame and after performing a Laplace manipulations, considering that the equivalent ac voltage source of the induction motor is steadily at constant value, subtracting $e_a$ (for the phase-A) from both sides of Equation (4), the system transfer function $G_p$ is found, which according to the embodiment described here is used for the current controller design

$$V_a(s) - e_a(s) = I_a(s) . \left( R + L.s + j\omega L \right) \qquad (10)$$

$$\frac{I_a(s)}{V_a(s) - e_a(s)} = \frac{1/R}{1 + \dfrac{L}{R}\left(s + j\omega\right)}$$

Choosing $K_1 = 1/R$ and $T_1 = L/R$ gives

$$G_p(s) = \frac{K_l}{1 + T_l\left(s + j\omega\right)} \qquad (11)$$

The coupling term between the d-axis and the q-axes is depicted by $j\omega T_1$.

The equivalent transfer function $G_m$ of the PWM block is selected as a first order approximation by taking into account the delays because of the PWM converter and measurement devices and so on.

$$G_m(s) = e^{-sT_m} \cong \frac{1}{1+sT_m} \qquad (12)$$

Substituting for $G_p$ and $G_m$ from (11) and (12) into equation (9), one obtains

$$G_o = G_{con} \cdot \frac{1}{1+sT_m} \cdot \frac{K_l}{1+T_l(s+j\omega)} \qquad (13)$$

For the purpose of eliminating the complex terms, the transfer function of the controller is defined as

$$G_{con}(s) = \frac{1+T_l(s+j\omega)}{sT_i} \qquad (14)$$

When the dominant time constant of the system $T_1$ is compensated by the correlation time constant of the controller, the remaining open-loop transfer function becomes:

$$G_o = \frac{K_l}{sT_i(1+sT_m)} \qquad (15)$$

The value of the second parameter of the PI controller, which is the integration time constant $T_i$, is chosen in order to get a zero-crossing pulsation equal to the half of a breakpoint pulsation of $1/T_m$.
Controller Equation (14) has a complex transfer function, with extension of it, one finds

$$G_{con}(s) = \left( \frac{1+sT_l}{sT_i} + j\frac{\omega T_l}{sT_i} \right)$$

$$u_d + ju_q = \left( \frac{1+sT_l}{sT_i} + j\frac{\omega T_l}{sT_i} \right) \left( Er_d + jEr_q \right) \qquad (16)$$

where $Er_d = i_{dref} - i_d$ and $Erq = i_{qref} - i_q$ .
Following some mathematical effort, the resultant structure of the controller can be described as:

$$u_d + ju_q = \left( \frac{1+sT_l}{sT_i} + j\frac{\omega T_l}{sT_i} \right)\left( Er_d + jEr_q \right) \qquad (17)$$

$$\Rightarrow \begin{cases} u_d = \dfrac{1+sT_l}{sT_i}.Er_d - \dfrac{\omega T_l}{sT_i}.Er_q \\[2ex] u_q = \dfrac{1+sT_l}{sT_i}.Er_q + \dfrac{\omega T_l}{sT_i}.Er_d \end{cases}$$

Equation (17) denotes two first-order systems, wherein the last two terms of them show the cross coupling parts. $u_d$ and $u_q$ are new control signals that are generated by two independent PI controllers. One controller processes $(i_{dref} - i_d)$ to produce $u_d$, and the other takes the same action on $(i_{qref} - iq)$ to produce $u_q$. Moreover, $V_d$ and $V_q$ are two feedforward signals added to the control action obtained from equation (7), for providing a quick response to the ac system voltage disturbances. Moreover, the parameters of the two PI regulators can be easily calculated based on classical design methods to achieve good static and dynamic performance of the system.

Equations relating to reference voltages for the PWM unit, the current controller output and the feedforward terms can be deduced as:

$$\begin{aligned} v_d &= u_d + V_d \\ v_q &= u_q + V_q \end{aligned} \qquad (18)$$

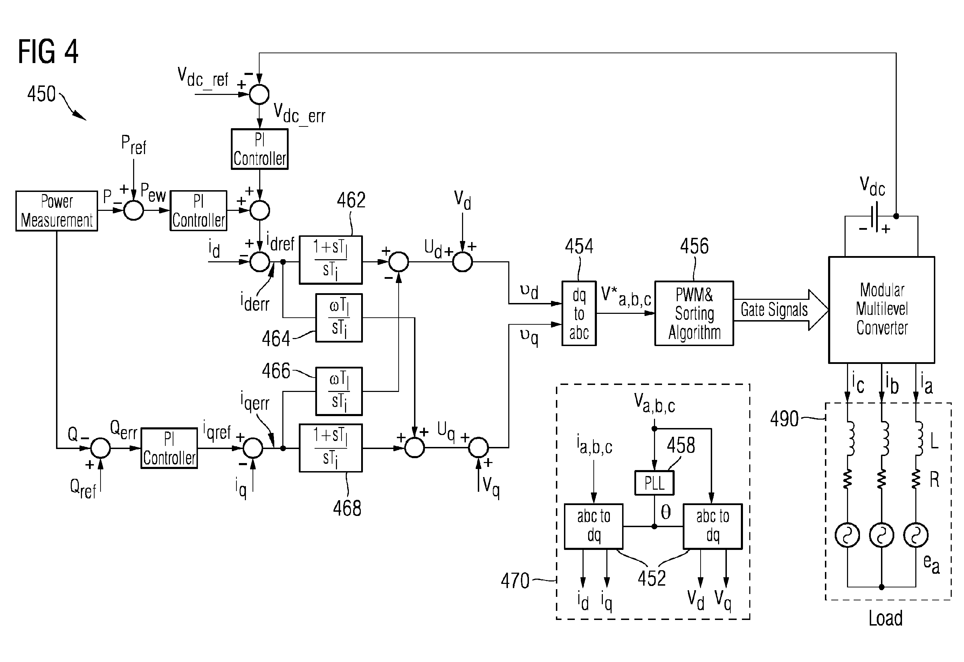

Based on the above equations, the structure of a current controller 450 in accordance with a preferred embodiment of the invention is obtained. This structure is shown in Figure 4.

The active current reference $i_{dref}$ is used to regulate the dc link voltage $V_{dc}$ as well as the active power at their corresponding desired values. As can be seen from Figure 4, the active current reference $i_{dref}$ is generated based on a measured active power signal P and a predefined active power reference signal $P_{ref}$, which are combined to an active power error signal $P_{err}$. Further, the active current reference $i_{dref}$ is further generated based on the actual DC voltage $V_{dc}$ and a reference signal $V_{dc-ref}$ for the DC voltage $V_{dc}$, which are combined to a DC voltage error signal $V_{dc-err}$. As can be further seen from Figure 4, the reactive current reference $i_{qref}$ is generated based on a measured reactive power signal Q and a predefined reactive power reference signal $Q_{ref}$, which are combined to an reactive power error signal $Q_{err}$.

As can be seen from Figure 4, the obtained reference currents $i_{dref}$ and $i_{qref}$ will then be fed to a feedback current controller which will process corresponding current error signals $i_{derr}$ and $i_{qerr}$ (i.e. the difference between the calculated active current signal $i_d$ and the active current reference signal $i_{dref}$ respectively the difference between the calculated reactive current signal $iq$ and the reactive current reference signal $i_{qref}$) in order to calculate a direct voltage control signal $u_d$ and a quadrature voltage control signal $u_d$ which will be used, as will be described below in detail, for determining modified direct/quadrature control signals $v_d/v_q$.

As can be further seen from Figure 4, the active current reference signal $i_{dref}$ is processed both by a PI controller 462 and by a cross coupling controller 464, which is an integral controller. Correspondingly, the reactive current reference signal $i_{qref}$ is processed both by a PI controller 468 and by a cross coupling controller 466, which is also an integral controller.

The feedback-parameter acquisition must be modified before being applied in the real circuit in which all parameters are given in the stationary abc-reference frame. Additions to the control designed for the model of a five-level MMC are as follows: a Park's transformation 452, an inverse Park's transformation 454, a PWM generator 456 and a phase lock loop (PLL) 458.

Descriptive speaking, the cross coupling controllers 464 and 466 introduce modified coupling terms which cause an effective decoupling of the d-axis from the q-axis. As has already been mentioned above, this decoupling has the positive effect that the stability of an operation of a DC-AC or AC-DC converter can be significantly improved.

According to the embodiment described here all feedback parameters are measured by using the signal transducers. Originally, these feedback signals are in abc-coordinates. With the proposed control technique, all signals are real-time transferred into the rotating dq-reference frame domain by Park's transformation matrix.

The PLL 458 of a control block 470 is the tool used to obtain the information for system synchronization, which is important for the synchronous-control technique. The inputs of the PLL 458 are the three-phase load voltages $V_a$, $V_b$, $V_c$, and the PLL 458 output is the phase information $\theta$ of the voltages $V_a$, $V_b$, $V_c$ in the form of cosine and sine functions which are used (i) for abc-dq transformation of the currents $i_a$, $i_b$ and $i_c$ to the calculated active/reactive current signals $i_d$ and iq and (ii) for the abc-dq transformation of the voltages $V_a$, $V_b$, $V_c$ to a direct feedforward signal $V_d$ and a quadrature feedforward signal Vq.

Hereinafter it will be shown that proposed strategy implemented is almost independent from system parameters uncertainties contrary to the existing decoupling approach.

As it can be noticed from Figure 4, three-phase sinusoidal modulation waveforms $V_a^*$, $V_b^*$, $V_c^*$ which are the references for the converter output voltages, are recovered from modified direct/quadrature control signals $v_d$, $v_q$ by the inverse dq-transformation and used as inputs by the PWM block 456 to produce the command signals to the power devices.

In view of Equations (2) and (3) and Figure 1, the following relations exist (for example for the A-phase):

$$\begin{cases} E_p - V_a = \sum_{j=1}^{N} v_j + L_1 \frac{d}{dt} i_p \\ E_n + V_a = \sum_{j=N+1}^{2N} v_j + L_1 \frac{d}{dt} i_n \end{cases} \qquad (19-a)$$

$$\Rightarrow \begin{cases} V_a = \frac{1}{2}\left( \sum_{j=N+1}^{2N} v_j - \sum_{j=1}^{N} v_j - L_1 \frac{d}{dt} i_a \right) \\ E_p + E_n - \sum_{j=1}^{N} v_j - \sum_{j=N+1}^{2N} v_j = 2 L_1 \frac{di_{cir}}{dt} \end{cases} \qquad (19-b)$$

It is mentioned that the cell capacitor voltages are not constant and harmonic component appears even in the ideal case because of the flowing ac current through them. Therefore, arm voltages constitute the dc and ripple components.

A mathematical derivation of the voltage across the arm inductors given by

$$2 L_1 \frac{di_{cir}}{dt} = -\sum_{j=1}^{2N} \tilde{v}_j \qquad (20)$$

Where $\tilde{a}_j$ denotes the ripple component of cell capacitor voltage in both upper and lower arms.

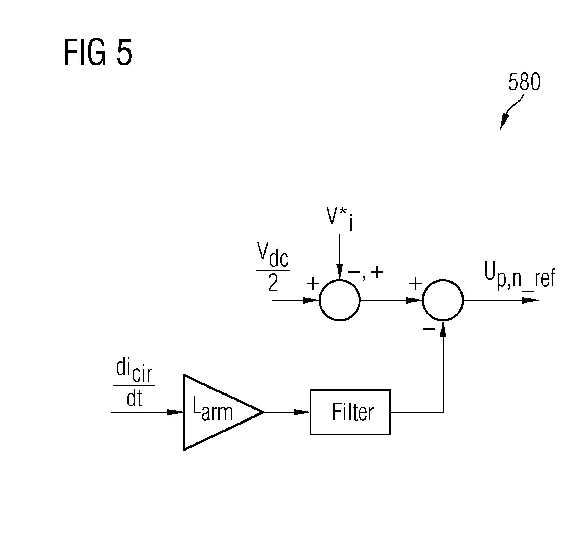

Consequently, by means of the technique indicated in Figure 5, the control circuit loop is responsible for decreasing the voltage fluctuation on floating capacitors in upper and lower arms. Therefore, the reference voltages $u_{p,n\_ref}$ of upper and lower arms are expressed as:

$$u_{p\_ref} = \frac{V_{dc}}{2} - V_i^* - L_1 \frac{di_{cir}}{dt} \qquad where \ i = a,b \ or \ c \qquad (21)$$

$$u_{n\_ref} = \frac{V_{dc}}{2} + V_i^* - L_1 \frac{di_{cir}}{dt}$$

In order to recapitulate the above described embodiment of the present invention one can state:

- The described control procedure for a MMC overcomes drawbacks of existing MMC control procedures by a special proportional-integral control rule, which is derived via converter transfer function based on a continuous mathematical model of an MMC, operating as an inverter. By utilizing this technique the task of current control dynamics, d-axis and q-axis components, become controlled separately of each other while step change occurs in one axis.
- With the described controller an MMC is controlled in such a way that the dc link voltage is constant and the arm voltages across capacitors are balanced with an easy balancing algorithm.
- A vector control scheme uses the reference frame oriented such that it is adjusted to the load ac voltage vector, which is divided into two current control loops.
- An internal loop is used for determining d-axis and q-axis components in response to their reference values by regulating the output voltage references of the converter. - An external control loop function is used for calculating the dq current references with respect to a dc link voltage control loop, an active power command and a reactive power reference through PI controllers, respectively.
- In order to minimize capacitor voltage ripple magnitude, which is important factor to improve the startup performance of induction motors, a control loop for reducing voltage fluctuation is developed. The proposed structure uses the three phase inner circulating currents in the MMC by adding the voltage drop of arm inductor to the reference waveforms of the converter obtained from current loop controllers. It does not affect the output voltages and currents of the MMC at the ac side.
- With the described control procedure important requirements for operating a MMC in a stable and reliable manner can be fulfilled. Such requirements are e.g. (a) a high dynamic response, (b) a disturbance rejection, (c) a low harmonic distortion of the output current, (d) a regulation of the dc-link voltage and, a provision of a bi-directional power flow.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

**Claims**

1. A method for controlling the operation of a DC-AC or AC-DC converter (100) comprising a plurality of semiconductor switches ($S_1$, $S_2$), the method comprising
determining, in a rotating dq-reference frame, a direct current error signal ($i_{derr}$) and a quadrature current error signal ($i_{qerr}$),
performing a first control procedure with the direct current error signal ($i_{derr}$) and with the quadrature current error signal ($i_{qerr}$),
performing a second control procedure with the direct current error signal ($i_{derr}$) and with the quadrature current error signal ($i_{qerr}$),
obtaining a direct voltage control signal ($u_d$) by subtracting the signal resulting from the second control procedure of the quadrature current error signal ($i_{qerr}$) from the signal resulting from first control procedure of the direct current error signal ($i_{derr}$),
obtaining a quadrature voltage control signal ($u_q$) by adding the signal resulting from the second control procedure of the direct current error signal ($i_{derr}$) to the signal resulting from first control procedure of the quadrature current error signal ($i_{qerr}$),
executing a transformation from the rotating dq-reference frame to a stationary abc-reference frame based on (i) the obtained direct voltage control signal ($u_d$) and (ii) the obtained quadrature voltage control signal ($u_q$), and
controlling the switching states of the plurality of semiconductor switches ($S_1$, $S_2$) based on the signals resulting from the executed transformation from the rotating dq-reference frame to the stationary abc-reference frame.

2. The method as set forth in the preceding claim, wherein the first control procedure is a proportional-integral control procedure.

3. The method as set forth in any one of the preceding claims, wherein the second control procedure is an integral control procedure.

4. The method as set forth in any one of the preceding claims, wherein the transformation from the rotating dq-reference frame to the stationary abc-reference frame is executed further based on

(i) a direct voltage feedforward signal ($V_d$) resulting from a transformation of three voltages ($V_a$, $V_b$, $V_c$) being physically present at three nodes of symmetry within the DC-AC or AC-DC converter from the stationary abc-reference frame to the rotating dq-reference frame and

(ii) a quadrature voltage feedforward signal (Vq) resulting from a transformation of the three voltages ($V_a$, $V_b$, $V_c$) being physically present at the three nodes of symmetry within the DC-AC or AC-DC converter from the stationary abc-reference frame to the rotating dq-reference frame.

5. The method as set forth in the preceding claim, wherein the transformation from the rotating dq-reference frame to the stationary abc-reference frame is executed with a modified direct voltage control signal ($v_d$) and with a modified quadrature voltage control signal ($v_q$),

wherein the modified direct voltage control signal ($v_d$) is obtained by adding the direct voltage control signal ($u_d$) to the direct voltage feedforward signal ($v_d$) and

wherein the modified quadrature voltage control signal ($v_d$) is obtained by adding the quadrature voltage control signal ($u_q$) to the quadrature voltage feedforward signal ($V_d$).

6. The method as set forth in any one of the preceding claims, wherein

the DC-AC or AC-DC converter (100) is a modular multilevel converter (100) comprising three branches (102, 104, 106) each branch (102, 104, 106) comprising an upper arm and a lower arm, wherein each arm comprises a serial connection of a plurality of submodules (110, 210), wherein each submodule (110, 210) comprises a capacitor (C) and two semiconductor switches ($S_1$, $S_2$),

wherein

controlling the switching states of the semiconductor switches ($S_1$, $S_2$) being assigned to one branch (102, 104, 106) is further executed based on (i) a first reference voltage ($u_{p-ref}$) for the upper arm of the respective branch (102, 104, 106) and (ii) a second reference voltage ($u_{n-ref}$) for the lower arm of the respective branch (102, 104, 106).

7. The method as set forth in the preceding claim, further comprising

obtaining, for each branch (102, 104, 106) of the modular multilevel converter (100), a first reference voltage ($u_{p-ref}$) for the upper arm of the modular multilevel converter based on

(i) a derivative with respect to time of a circulating current ($i_{cir}$) circulating through the respective branch,

(ii) the actual voltage ($V_{dc}$) of a DC voltage bridge of the modular multilevel converter (100), and

(iii) one voltage of the three voltages ($V_a$, $V_b$, $V_c$) being physically present at three nodes of symmetry within the modular multilevel converter (100), wherein the one voltage is assigned to the respective branch (102, 104, 106), and

obtaining, for each branch (102, 104, 106) of the modular multilevel converter (100), a second reference voltage ($u_{n\_ref}$) for the lower arm of the modular multilevel converter (100) based on

(i) the derivative with respect to time of the circulating current ($i_{cir}$) circulating through the respective branch (102, 104, 106),

(ii) the actual voltage ($V_{dc}$) of the DC voltage bridge of the modular multilevel converter (100), and

(iii) one voltage of the three voltages ($V_a$, $V_b$, $V_c$) being physically present at three nodes of symmetry within modular multilevel converter (100), wherein the one voltage is assigned to the respective branch (102, 104, 106).

8. The method as set forth in any one of the preceding claims, wherein

determining the direct current error signal ($i_{derr}$) comprises

comparing, in the rotating dq-reference frame, a calculated active current signal ($i_d$) with an active current reference signal ($i_{dref}$).

9. The method as set forth in the preceding claim, wherein the active current reference signal ($i_{dref}$) is determined based on

a measured active power signal (P) being indicative for the actual active power being transferred with the DC-AC or AC-DC converter.

10. The method as set forth in any one of the preceding claims, wherein

determining the quadrature current error signal ($i_{qerr}$) comprises

comparing, in the rotating dq-reference frame, a calculated reactive current signal (iq) with an reactive current reference signal ($i_{qref}$).

11. The method as set forth in the preceding claim, wherein the reactive current reference signal ($i_{qref}$) is determined based on a measured reactive power signal (Q) being indicative for the actual reactive power being transferred with the DC-AC or AC-DC converter.

12. A controller (450) for controlling the operation of a DC-AC or AC-DC converter (100) comprising a plurality of semiconductor switches ($S_1$, $S_2$), wherein the controller (450) is configured for carrying out the method as set forth in any one of the preceding claims.

13. A computer program for controlling the operation of a DC-AC or AC-DC converter (100) comprising a plurality of semiconductor switches ($S_1$, $S_2$), the computer program, when being executed by a data processor, is adapted for controlling and/or for carrying out the method as set forth in any one of the claims 1 to 11.

**Amended claims in accordance with Rule 137(2) EPC.**

1. A method for controlling the operation of a DC-AC or AC-DC converter (100) comprising a plurality of semiconductor switches ($S_1$, $S_2$), the method comprising
determining, in a rotating dq-reference frame, a direct current error signal ($i_{derr}$) and a quadrature current error signal ($i_{qerr}$),
performing a first control procedure with the direct current error signal ($i_{derr}$) and with the quadrature current error signal ($iq_{err}$),
performing a second control procedure with the direct current error signal ($i_{derr}$) and with the quadrature current error signal ($i_{qerr}$),
obtaining a direct voltage control signal ($u_d$) by subtracting the signal resulting from the second control procedure of the quadrature current error signal ($i_{qerr}$) from the signal resulting from first control procedure of the direct current error signal ($i_{derr}$),
obtaining a quadrature voltage control signal ($u_q$) by adding the signal resulting from the second control procedure of the direct current error signal ($i_{derr}$) to the signal resulting from first control procedure of the quadrature current error signal ($i_{qerr}$),
executing a transformation from the rotating dq-reference frame to a stationary abc-reference frame based on

   (i) the obtained direct voltage control signal ($u_d$) and
   (ii) the obtained quadrature voltage control signal ($u_q$), and

controlling the switching states of the plurality of semiconductor switches ($S_1$, $S_2$) based on the signals resulting from the executed transformation from the rotating dq-reference frame to the stationary abc-reference frame, wherein the second control procedure is an integral control procedure.

2. The method as set forth in the preceding claim, wherein the first control procedure is a proportional-integral control procedure.

3. The method as set forth in any one of the preceding claims, wherein
the transformation from the rotating dq-reference frame to the stationary abc-reference frame is executed further based on

   (i) a direct voltage feedforward signal ($V_d$) resulting from a transformation of three voltages ($V_a$, $V_b$, $V_c$) being physically present at three nodes of symmetry within the DC-AC or AC-DC converter from the stationary abc-reference frame to the rotating dq-reference frame and
   (ii) a quadrature voltage feedforward signal (Vq) resulting from a transformation of the three voltages ($V_a$, $V_b$, $V_c$) being physically present at the three nodes of symmetry within the DC-AC or AC-DC converter from the stationary abc-reference frame to the rotating dq-reference frame.

4. The method as set forth in the preceding claim, wherein the transformation from the rotating dq-reference frame to the stationary abc-reference frame is executed with a modified direct voltage control signal ($v_d$) and with a modified quadrature voltage control signal ($v_q$),
wherein the modified direct voltage control signal ($v_d$) is obtained by adding the direct voltage control signal ($u_d$) to the direct voltage feedforward signal ($V_d$) and
wherein the modified quadrature voltage control signal ($v_d$) is obtained by adding the quadrature voltage control signal ($u_q$) to the quadrature voltage feedforward signal ($v_d$).

**5.** The method as set forth in any one of the preceding claims, wherein
the DC-AC or AC-DC converter (100) is a modular multilevel converter (100) comprising three branches (102, 104, 106) each branch (102, 104, 106) comprising an upper arm and a lower arm, wherein each arm comprises a serial connection of a plurality of submodules (110, 210), wherein each submodule (110, 210) comprises a capacitor (C) and two semiconductor switches ($S_1$, $S_2$),
wherein
controlling the switching states of the semiconductor switches ($S_1$, $S_2$) being assigned to one branch (102, 104, 106) is further executed based on (i) a first reference voltage ($u_{p\_ref}$) for the upper arm of the respective branch (102, 104, 106) and (ii) a second reference voltage ($u_{n\_ref}$) for the lower arm of the respective branch (102, 104, 106).

**6.** The method as set forth in the preceding claim, further comprising
obtaining, for each branch (102, 104, 106) of the modular multilevel converter (100), a first reference voltage ($u_{p\_ref}$) for the upper arm of the modular multilevel converter based on

(i) a derivative with respect to time of a circulating current ($i_{cir}$) circulating through the respective branch,
(ii) the actual voltage ($V_{dc}$) of a DC voltage bridge of the modular multilevel converter (100), and
(iii) one voltage of the three voltages ($V_a$, $V_b$, $V_c$) being physically present at three nodes of symmetry within the modular multilevel converter (100), wherein the one voltage is assigned to the respective branch (102, 104, 106), and

obtaining, for each branch (102, 104, 106) of the modular multilevel converter (100), a second reference voltage ($u_{n\_ref}$) for the lower arm of the modular multilevel converter (100) based on

(i) the derivative with respect to time of the circulating current ($i_{cir}$) circulating through the respective branch (102, 104, 106),
(ii) the actual voltage ($V_{dc}$) of the DC voltage bridge of the modular multilevel converter (100), and
(iii) one voltage of the three voltages ($V_a$, $V_b$, $V_c$) being physically present at three nodes of symmetry within modular multilevel converter (100), wherein the one voltage is assigned to the respective branch (102, 104, 106).

**7.** The method as set forth in any one of the preceding claims, wherein
determining the direct current error signal ($i_{derr}$) comprises
comparing, in the rotating dq-reference frame, a calculated active current signal ($i_d$) with an active current reference signal ($i_{dref}$).

**8.** The method as set forth in the preceding claim, wherein the active current reference signal ($i_{dref}$) is determined based on
a measured active power signal (P) being indicative for the actual active power being transferred with the DC-AC or AC-DC converter.

**9.** The method as set forth in any one of the preceding claims, wherein
determining the quadrature current error signal ($i_{qerr}$) comprises
comparing, in the rotating dq-reference frame, a calculated reactive current signal (iq) with an reactive current reference signal ($i_{qref}$).

**10.** The method as set forth in the preceding claim, wherein the reactive current reference signal ($i_{qref}$) is determined based on a measured reactive power signal (Q) being indicative for the actual reactive power being transferred with the DC-AC or AC-DC converter.

**11.** A controller (450) for controlling the operation of a DC-AC or AC-DC converter (100) comprising a plurality of semiconductor switches ($S_1$, $S_2$), wherein the controller (450) is configured for carrying out the method as set forth in any one of the preceding claims.

**12.** A computer program for controlling the operation of a DC-AC or AC-DC converter (100) comprising a plurality of semiconductor switches ($S_1$, $S_2$), the computer program, when being executed by a data processor, is adapted for controlling and/or for carrying out the method as set forth in any one of the claims 1 to 10.

## FIG 1

## FIG 2

## FIG 3

FIG 4

450

Power Measurement

$V_{dc\_ref}$ — + $V_{dc\_err}$ PI Controller

$P_{ref}$ + $P_{ew}$ — PI Controller

$P$ —

$i_{dref}$ + — $i_{derr}$ $i_d$

462 $\dfrac{1+sT_i}{sT_i}$

464 $\dfrac{\omega T_i}{sT_i}$

466 $\dfrac{\omega T_i}{sT_i}$

468 $\dfrac{1+sT_i}{sT_i}$

$Q_{ref}$ + $Q_{err}$ PI Controller $i_{qref}$ + — $i_{qerr}$ $i_q$

$Q$ —

$U_d$ + $v_d$ + $v_d$

$U_q$ + $v_q$ + $V_q$

454 dq to abc $V^*_{a,b,c}$

456 PWM & Sorting Algorithm

Gate Signals

Modular Multilevel Converter

$V_{dc}$ — +

$i_a$ L R $e_a$
$i_b$
$i_c$

Load

490

470

$V_{a,b,c}$ 458 PLL $\theta$

abc to dq $V_q$ $V_d$

abc to dq $i_d$ $i_q$

452

$i_{a,b,c}$

# FIG 5

580

$V^*_i$

$\dfrac{V_{dc}}{2}$

$U_{p,n\_ref}$

$\dfrac{di_{cir}}{dt}$

$L_{arm}$

Filter

**EP 2 811 641 A1**

Europäisches
Patentamt

European
Patent Office

Office européen
des brevets

# EUROPEAN SEARCH REPORT

Application Number

EP 13 17 0675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 753 091 A (CHONGQING HONGYU PREC IND CO L) 23 June 2010 (2010-06-23) | 1,2,8, 10,12,13 | INV. H02M7/219 |
| Y | * figure 1 * | 6 | H02M7/5387 |
| A | | 3-5,7,9, 11 | H02M1/00 H02M7/483 |
| | ----- | | |
| Y | WO 2012/140008 A2 (SIEMENS AG [DE]; DAS ANANDARUP [NO]; NADEMI HAMED [NO]; NORUM LARS [NO) 18 October 2012 (2012-10-18) * figures 1,2 * | 6 | |
| | ----- | | |

TECHNICAL FIELDS
SEARCHED      (IPC)

H02M

The present search report has been drawn up for all claims

| Place of search | Date of completion of the search | Examiner |
|---|---|---|
| Munich | 6 March 2014 | Zettler, Karl-Rudolf |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 17 0675

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2014

| Patent document cited in search report | | Publication date | Patent family member(s) | | Publication date |
|---|---|---|---|---|---|
| CN 101753091 | A | 23-06-2010 | NONE | | |
| WO 2012140008 | A2 | 18-10-2012 | EP | 2678932 A2 | 01-01-2014 |
| | | | WO | 2012140008 A2 | 18-10-2012 |

EPO FORM P0459

For more details about this annex : see Official Journal of the European Patent Office, No. 12/82